# EUROPEAN PATENT SPECIFICATION

(11) **EP 2 026 266 B1**
(45) Date of publication and mention of the grant of the patent: **16.02.2011**
(21) Application number: 07113346.6
(22) Date of filing: 27.07.2007
(51) Int. Cl.: G06Q 20/00

(54) **Method and apparatus for performing delegated transactions**
Verfahren und Vorrichtung zur Durchführung delegierter Transaktionen
Procédé et appareil pour effectuer des transactions déléguées

(43) Date of publication of application: 18.02.2009
(73) Proprietor: NTT DoCoMo, Inc., Tokyo (JP)
(72) Inventor: Soghoian, Christopher, Charlottesville 22901 (US); Aad, Imad, 80689 Munich (DE)
(74) Representative: Betten & Resch

(56) References cited:
- EP-A- 1 215 636
- EP-A- 1 783 676
- WO-A-00/72226
- WO-A-01/41081
- WO-A-02/09001
- WO-A-99/42301
- WO-A-99/45693
- US-A1- 2002 198 848
- US-B1- 6 209 091

## Description

### FIELD OF THE INVENTION

The present invention relates to a method and an apparatus for performing delegated transactions.

### BACKGROUND OF THE INVENTION

Current payment systems require users to place large amounts of trust in those that they delegate tasks to. Parents cannot be sure if their university aged children are spending money intended for food on alcohol. Servants and cooks may opt to purchase lower quality food with the week's budget and keep the money that they saved for themselves. Companies cannot be sure how their traveling employees are spending their per diem budget. Those in remote areas in developing countries without banking services nearby must give their ATM card and PIN numbers to friends and family who are themselves making the journey to the ATM several hours away, and thus while they only wish to have a moderate sum withdrawn, must trust their friend not to draw down their account to the maximum allowed. While PIN and password sharing is common amongst married couples, and those in rural areas, banking policies do not reflect the reality of the situation. Many banking fraud rules state that the banks will only be held responsible for fraud in cases where the customer has not shared their login information with anyone else. Thus, when users share their account authentication information with trusted friends, they lose any form of legal liability protection in cases of fraud, even when the fraud is later committed by complete strangers

Therefore there is a severe security problem when enabling a "delegated payment", i.e. if a first person authorizes by some authorization procedure the execution of a payment or some transaction on his behalf but without him having full control.

In the following there will be explained existing mechanisms for "delegated payment" or executing a delegated transaction.

### Cash

The simplest of the existing schemes involves giving someone cash, and telling them what they can and cannot purchase. The security of this system relies completely on trust. The payer has no way of knowing if the delegated party will run off with the money, or attempt to purchases sub-quality goods and pass them off as the real article.

### Credit Cards

In many businesses, the practice of giving employees a company credit card is very common. This system also involves a fairly significant amount of trust. Information on the individual items purchased is not delivered by the merchant to the credit card company, and thus the business has no trusted method of knowing which items the employee has purchased. They must rely upon paper receipts, which can be falsified after-the-fact. There is also the risk of a rogue employee using the card on a wild spending spree.

### Reimbursement

Another method popular in businesses requires that employees pay for all expenses with their own funds, collect receipts, and then submit expense reports afterwards. This system has a number of downsides. Employees often resent the loan they are essentially making to their employer. Prolonged business travel or legitimate large purchases have the potential to cause financial problems for employees. Employees can also falsify receipts.

Apart from these conventional solutions there are electronic approaches, e. g. solutions which deal with electronic payments, secure payments, or anonymous payment. All these solutions, however, do not provide a secure and efficient mechanism for "delegated payment" where a first person authorizes a second person to carry out a delegated payment or transaction.

It is therefore an object of the invention to provide a mechanism for securely enabling a third party to make a delegated payment or to carry out a delegated transaction (such as a withdrawal from an account).

EP 1 215 636 A2 discloses a method of authorizing third parties to conduct financial transactions via an ATM. A user firstly encrypts details of a transaction to be performed on a personal digital assistant (PDA) or similar device, and then transfers the encrypted data to a third party device. The third party lacks the decryption key, and is unable to access the transaction details or details of the user's account The third party then accesses an ATM and transfers the encrypted data to the ATM. The ATM operator is able to decrypt the data, and performs the transaction. The transaction may include data limiting its performance to specific time periods, location, or repetitions.

Documents WO 00/72226 A, WO 99/42301 A, EP 1 783 676 A, WO 02/09001 A, WO 99/45693 A, US 6 209 091 B1, US 2002/198848 A1, WO 01/41081 A, US 2003/171975 A1, US 2003/074562 A1 and WO 99/57835 A1 disclose several methods and systems for delegating permissions and for verifying transactions and authenticity information.

### SUMMARY OF THE INVENTION

The present invention is defined in the independent claims. The dependent claims defining the embodiments of the invention.

According to one embodiment there is provided a computer implemented method for enabling a third party by a user to execute a transaction on behalf of the user, said method comprising: generating a token based on at least an account identifier identifying an account of said user, a secret authorization identifier known only by the user and a bank and corresponding to said account of said user, and a transaction definition defining the type of transaction to be performed;
encrypting said token by an encryption method to generate an encrypted token, said encryption method being predefined such that it is known by said bank and can be performed inversely by said bank;
transferring said encrypted token from said user to said third party to thereby authorize said third party to define the transaction as defined in said transaction definition on behalf of the account of said user specified in said token: wherein
for executing said transaction said encrypted token is transferred to the bank to which the account specified in said token belongs, said bank verifying the authenticity of said encrypted token by performing an inverse encryption of said encrypted token in order to either allow or refuse said transaction on behalf of the account of said user depending on whether the correctness of said secret authorization identifier corresponding to said account could be verified or not, said method further being characterized by comprising:
Including in said token a list of identifiers identifying the items which should be bought by the third party on behalf of the user, said identifiers being respectively concatenated to random numbers and hashed;
transmitting the identifiers of the one or more items to be bought concatenated with their corresponding random numbers from the third party to the merchant,
transferring said encrypted token from said third party to the merchant;
for each of the identifiers concatenated with a random number which was transmitted to said merchant, calculating by said merchant a hash value based on the identifier and the corresponding random number;
transmitting the encrypted token and the calculated hash values from the merchant to the bank;
inversely performing by said bank said encryption of said token; and
allowing the transaction by said bank only if the one or more hash values sent by the merchant are included in said decrypted token.

This allows a simple, efficient and secure implementation of a delegated payment.

According to one embodiment said encryption of said token comprises one of the following: encrypting said token with the public key of the bank to which the account specified in said token belongs; or
applying a hash algorithm on said token to obtain a hash value based on said token.

Using the public key of the bank ensures secure encryption. Using a hash algorithm reduces the complexity of the encrypted version of the token, so that it can e.g. be transferred to the concierge or to the mechanism transmitting it to the bank (like an ATM machine) even manually.

According to one embodiment the method further comprises:
transferring said encrypted token from said third party to a merchant in order to pay said merchant, and
transferring said encrypted token from said merchant to said bank for performing said verification in order to either allow or deny said transaction depending on said verification result.

In this manner the transaction between a third party (the delegate) and a merchant can be checked whether it is properly authorized by the user who issued the token.

According to one embodiment the method further comprises:
transferring said encrypted token from said third party to a merchant in order to pay said merchant, and
transferring said encrypted token from said merchant to said bank for performing said verification in order to either allow or deny said transaction depending on said verification result.

According to one embodiment the method further comprises:
including a list of identifiers of the items which should be bought by the third party on behalf of the user,
transmitting identifiers of the items to be bought from the merchant to the bank; and allowing the transaction by said bank only if the item identifier sent by the merchant is included in said encrypted token.

This allows to further specify by the user for which kind of transaction (which items) the token should be used.

According to one embodiment the method further comprises:
including a list of identifiers identifying the items which should be bought by the third party on behalf of the user, said identifiers being respectively concatenated to random numbers and hashed;
transmitting said hashed values of the one or more items to be bought from the third party to the merchant and from the merchant to the bank; and
allowing the transaction by said bank only if the one or more hash values sent by the merchant are included in said encrypted token.

This allows to keep the items which are bought unknown to the bank. Moreover, the transaction in this manner can be split up.

According to one embodiment the method further comprises:
including a list of identifiers identifying the items which should be bought by the third party on behalf of the user, said identifiers being respectively concatenated to random numbers and hashed;
transmitting the one or more hash functions used and the identifiers (which may be hashed) of the one or more items to be bought and their corresponding random numbers from the third party to the merchant;
calculating a hash value based on the identifiers and the corresponding random numbers of the one or more items to be bought and transmitting the hash values from the merchant to the bank; and
allowing the transaction by said bank only if the one or more hash values sent by the merchant are included in said encrypted token.

While one embodiment the user (Alice) may compute the hashes, in another embodiment the merchant may do it. The problem with the first is that the concierge may pass a hashed item of potatoes, while buying tomatoes, for the same amount of money. The problem with the second is that the merchant does not know what are the hash functions used by each bank. Therefore in one embodiment the Concierge passes the items and the random numbers to the merchant, who then computes the hashes using standardized functions (like for encryption). Since there may be several standardized hash functions, the concierge may pass the items, their random numbers, and the hash function used for all items.

This embodiment allows to keep the items which are bought unknown to the bank. Moreover, the transaction in this manner can be split up. Furthermore, it can be ensured that the concierge indeed transmits the right identifiers and random values of the items which he should buy to the merchant and not any un-purchased ones.

According to one embodiment said token further includes one or more of the following:
an identifier of the third party;
an identifier of the token;
a timestamp;
one or more transaction options;
a maximum amount of money to be spent using the token;
the respective maximum prices for the individual items on the shopping list.

According to one embodiment the method further comprises:
keeping track of the transactions which have been performed by using a certain token by the bank;
deducting the used amount from the token to obtain the remaining credit for the token; and for each new transaction to be performed, checking whether the token still has sufficient credit to execute this transaction.

This avoids double spending and further it avoids that more money is spent than the total amount specified in the token.

According to one embodiment the method further comprises:
instead of the identifier of the third party there is included in said token the identifier of the user or a unique code or password only known to the user to thereby generate a self-issued traveler cheque to the user by himself.

In this manner a user may issue a traveler cheque to himself in an easy manner.

According to one embodiment there is provided an apparatus for enabling a third party by a user to execute a transaction on behalf of the user, said apparatus comprising:
a module for generating a token based on at least an account identifier identifying an account of said user, a secret authorization identifier known only by the user and a bank and
corresponding to said account of said user, and a transaction definition defining the type of transaction to be performed;
a module for encrypting said token by an encryption method to generate an encrypted token,
said encryption method being predefined such that it can be performed inversely by said bank;
a module for transferring said encrypted token from said user to said third party to thereby authorize said third party to define the transaction as defined in said transaction definition on behalf of the account of said user specified in said token; wherein
a module for transferring said encrypted token to the bank to which the account specified in said encrypted token belongs for execution, said bank verifying the authenticity of said encrypted token by either performing an inverse encryption of said encrypted token in order to either allow or refuse said transaction on behalf of the account of said user depending on whether the correctness of said secret authorization identifier corresponding to said account could be verified or not, said apparatus further being characterized by comprising:
   means for including in said token a list of identifiers identifying the items which should be bought by the third party on behalf of the user, said identifiers being respectively concatenated to random numbers and hashed;
   means for transmitting the identifiers of the one or more items to be bought concatenated with their corresponding random numbers from the third party to the merchant,
   means for transferring said encrypted token from said third party to the merchant;
   means for, for each of the identifiers concatenated with a random number which was transmitted to said merchant, calculating by said merchant a hash value based on the identifier and the corresponding random number;
   means for transmitting the encrypted token and the calculated hash values from the merchant to the bank;
   means for inversely performing by said bank said encryption of said token; and allowing the transaction by said bank only if the one or more hash values sent by the merchant are included in said decrypted token.

According to one embodiment the apparatus further comprises:
a module for performing a method according to one of the embodiments of the invention.

According to one embodiment there is provided a computer program comprising computer program code which when being executed on a computer enables said computer to carry out a method according one of the embodiments of the invention.

### DESCRIPTION OF THE DRAWINGS

Fig. 1 schematically illustrates a method according to an embodiment of the invention.
Figures 2 to 7 schematically illustrate tokens according to embodiments of the invention.

### DETAILED DESCRIPTION

Before explaining embodiments of the inventions, a first some terms which will be used in he following description will be explained.
- *ATM*: *Automated Teller Machine* / *Automatic Transaction Machine*
- *IR*: *Infra-Red*
- *PIN*: *Personal Identification Number*
- *QR code*: "*Quick Response*" *code*

Thinking of secure delegated payment, an expert in security technologies being confronted with such a task may consider the classical tools of cryptology like encryption and signatures. E.g. one possible approach which an expert in security technology might try to use would be signing documents. One could e.g. imagine to hand over to a third party a document, which may include e.g. a shopping list, and to sign this document using the private key of the user who generated the document. This would make sure that the document was authorized (and authored) by the user who signed it, and using his public key a merchant or a bank may proof the authenticity of this document. However, this comes at additional requirements/overheads for banks and for users, as will be discussed in somewhat more detail later, e.g. the banks or merchants must have available the public key of the author of the document, and considering the number of potential buyers (just everybody who may pass by), this seems to be not feasible, at least not practicable.

Therefore, according to an embodiment of the invention there is presented a secure method of delegating a payment task to a third party. According to one embodiment this third party may, or may not necessarily be identified. According to one embodiment there is provided a means of restricting the items that can be purchased. According to one embodiment system is privacy preserving, in that the account holder does not have to share her shopping list with the bank, yet it provides a means for the bank and merchant to communicate in order to restrict any un-approved items from being purchased. Further, according to one embodiment the scheme does not suffer from the problems of double spending. Furthermore, in one embodiment merchants do not learn the customer's name or bank account details. According to one embodiment it also allows an order to be partially fulfilled by multiple merchants, without requiring that the consumer specify them ahead of time. According to one embodiment, however, the consumer is allowed to restrict which delegated parties may retrieve the items, as well as restricting, should they wish, which merchants are permitted to sell those items.

The mechanism in one embodiment has minimum requirements for banks, merchants, and users. A user (Alice) constructs a transaction token that consists of her bank account number, her PIN, her shopping list and the third party's ID (concierge) all encrypted using the bank's public key. The shopping items can be hashed to keep the shopping list hidden from the bank. This solution also keeps the identity of Alice hidden from the merchant, and from the concierge. It also enforces Alice's control over the concierge's delegated purchases. The same mechanism can be used for a company payment to its employees on business trips. It provides much higher level security level against frauds, double payments, or thefts than existing payment approaches.

Technically, the solution provides a very high level of security for delegating payment or money withdrawal, while requiring little changes to the existing payment systems infrastructures. In fact, the solution can be used with existing hardware, only software changes are required.

In the following embodiments will be explained several embodiments of the invention. Thereby, at first reference is made to the example application involving a user, his concierge (=the third party who should execute the delegated transaction on behalf of the user), one or several merchants (where the transaction or payment is executed), and the user's bank.

The whole procedure includes the generation of a token and then its usage for executing the transaction. This will be explained in the following in somewhat more detail.

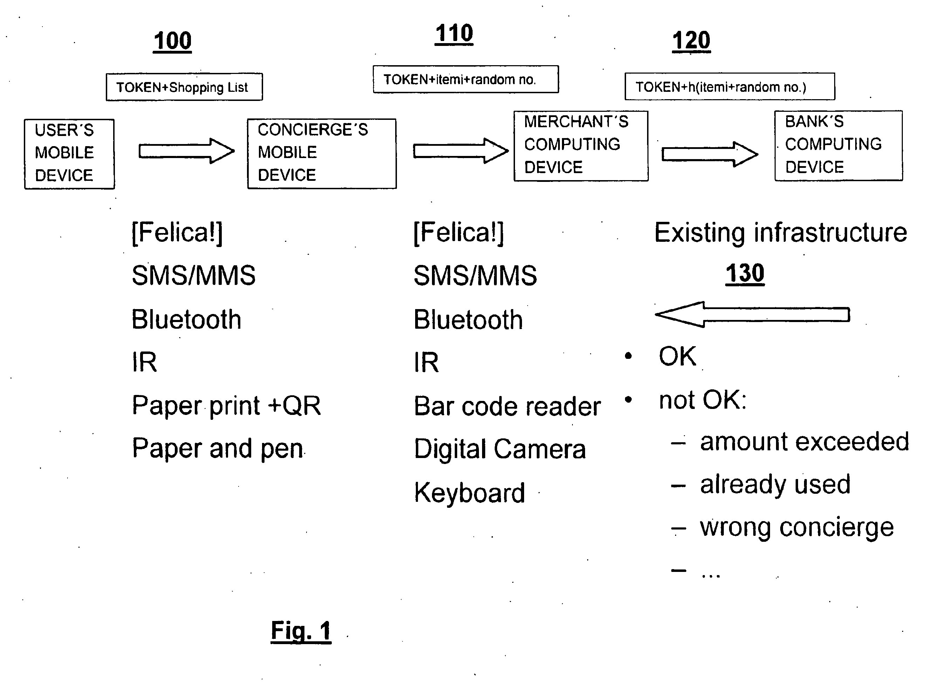

The whole process is schematicaly illustrated in Fig. 1.

A token is generated by a user and transmitted to a concierge (operation 100). The concierge then goes to the merchant to buy one or more items specified in the token and transmits the corresponding information to the merchant (operation 110).

From the merchant the token and the hash values based on the item identifiers and their corresponding random values are sent to the bank (operation 120)and checked, and depending on the result either a verification or a refusal is returned from the bank and the transaction is either performed or refused (operation 130)

The token is the document which is generated by the user and then handed over to the third party (the Concierge) in order to enable him to execute the transaction on behalf of the user. This can be done in any way or through any suitable communications link like blouetooth, MMS, IR, or the like. "Transaction on behalf of the user" means that the transaction is to the benefit or disadvantage of the user in monetary terms, and therefore the token includes an identifier for identifying the user's account, such as the account number, IBAN, or the like. It further includes some secret "authorization identifier" which is only known to the issuer and to the bank and which proofs that the user has authorized debiting his account, otherwise any third party knowing the user's account number could issue a token. Such an authorization identifier can for example be the PIN of the user or a keyword or any other code which proofs the authorization with respect to the bank account identifier by the account identifier.

Furthermore the token should include a transaction definition which identifies or defines the type of transaction to be executed. This can for example just be an amount of money (which the third party is then allowed to spend or withdraw from the user's account), or it may be a more complex transaction definition such as a shopping list which will be explained in more detail later.

Based on the account identifier, the authorization identifier and the transaction definition the token may be formed, e.g. by just concatenating this information. In this manner the token is a kind of "voucher" or "cheque" which is issued by the user to be used or "spent" by the third party on the user's behalf. However, in order to avoid that the secret information to generate the token such as the authorization identifier is abused by any fraudulent party, it may not be distributed in clear. Therefore the token is encrypted using some predefined encryption mechanism which is specific for the bank to which the user's account belongs. For example the token may be encrypted using the bank's public key. Alternatively the token may be hashed using a hash algorithm which is preagreed with the bank.

This enables then the bank which receives a thus encrypted token to identify the account on behalf of which the transaction should be made (thereby also identifying the issuer) and further enables it to verify the authorization of the issuer (through the PIN or the authorization identifier included in the token). In cases where the encryption was made by the public key of the bank, the bank just decrypts the token and has the information in clear. In case the encryption was made by some hash algorithm the bank reassembles the (unencrypted) token and hashes it to check whether the result matches with the hashed version which it has received. If this is the case the authorization has been verified and the transaction can be executed. It will be apparent that in this case there must be transmitted sufficient information in clear to the bank which enables it to reassemble the token as generated before the encryption, i.e. the account number (or some other identifier identifying the issuer of the token) as well as the transaction definition must be sent in clear to the bank which then can reassemble and hash the token to verify or refuse the transaction.

In accordance with the foregoing a delegated payment involves:
assembling the (unencrypted) token;
encrypting the token;
transferring the token to the third party (Concierge);
executing the transaction.

The execution of the transaction involves the transfer of the token either from the concierge directly to the bank or from the concierge to a merchant who then transfers it to the bank. The bank then verifies the authenticity of the token and authorizes the transaction which involves the transfer of the money from the user's account to either the concierge or to the merchant.

The generation of the token as well as its encryption according to an embodiment is executed in computer-implemented form, either on a PC or a mobile phone or any other device with sufficient ability to perform the assembling and encryption of the token. Preferably the device offers a graphic interface for the user which assists with the generation of the token and where the user can input the necessary information, e.g. selecting the account, entering the authorization identifier and the transaction definition in order to enable the device to generate the token.

The token may then in any suitable manner (e.g. through any communications link like bluetooth or the internet or through a memory device like a USB stick or any communication means) be transferred to the concierge (or to his computing or storage device or his mobile device, as illustrated as operation 100 in Fig. 1) who then transmits it to the bank or the merchant (as illustrated as operation 110 in Fig. 1). For this transmission also any suitable transmission means may be used, as illustrated as operation 110 in Fig. 1.

For the transmission from a merchant to the bank a typical transmission method would be the existing ATM network or the internet, but any other communication means (like a dialup connection) may be used (as illustrated as operation 120 in Fig. 1).

The token may even be printed out by the issuer and be physically handed over to the concierge who may then hand it over to a merchant, where it may be typed in manually into the merchants device (or read by OCR) for transmission to the bank.

It is, however, preferable to transmit the token in electronic form.

An exemplary token may look as follows:
{...Accnt#, PIN, Amount...}BankPubK

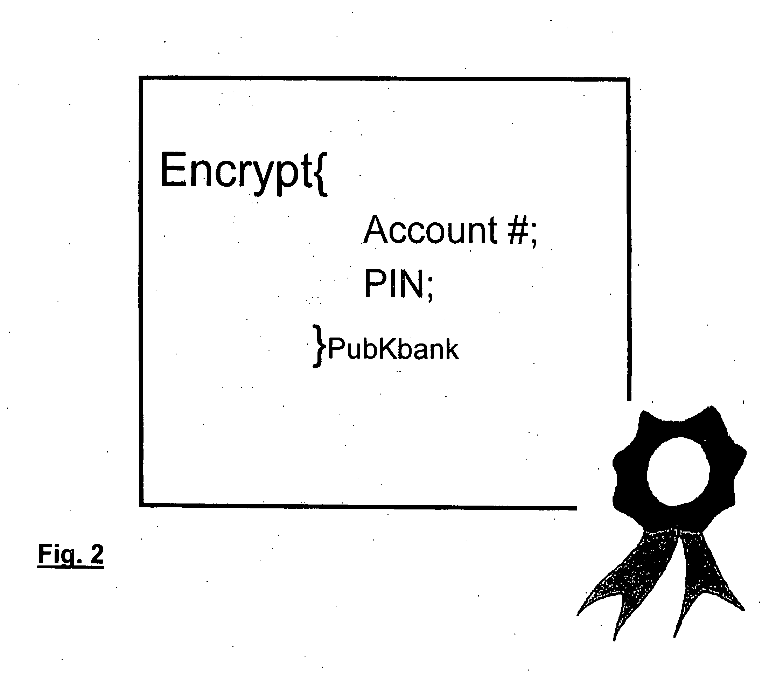

Such a token is schematically illustrated in Fig. 2. The full stops here indicate that the token may contain additional information which will be explained in more detail later.

The mechanism has several advantages over known methods:
- If the concierge's mobile is stolen, or the printed-out token is lost, Acct# and PIN are not
   revealed.
- If the concierge is malicious, he cannot steal the account # and PIN.
- If the merchant loses his data, or is hacked, the customers account# and PIN are kept safe.
- The merchant does not even know the identity of the customer.
- If enough customers use the same concierge, it is possible to gain some amount of anonymity. As the number of customers using that single concierge grow, the anonymity set grows. One example of this is a delivery service used by several users.
- If customers transmit their data to the concierge via Bluetooth or MMS, or Internet, it is possible to even be anonymous from concierge (using some kind of drop-box for goods afterwards).

The transaction definition may - as mentioned - according to one embodiment be relatively simple, it may include just an amount of money which then is authorized to be spent on behalf of or to be withdrawn from the account of the user.

According to a further embodiment the transaction definition may be more specific, it may include further definitions which may be used to restrict or more narrowly define the transaction.

According to one embodiment, e.g. it may include a kind of "shopping list" which restricts the "power" of the concierge to purchasing only those pre-selected items included in the shopping list.

A token which includes such a shopping list may include the list of items in the token follows:
{... (itemᵢ)...} BankPub_{K}

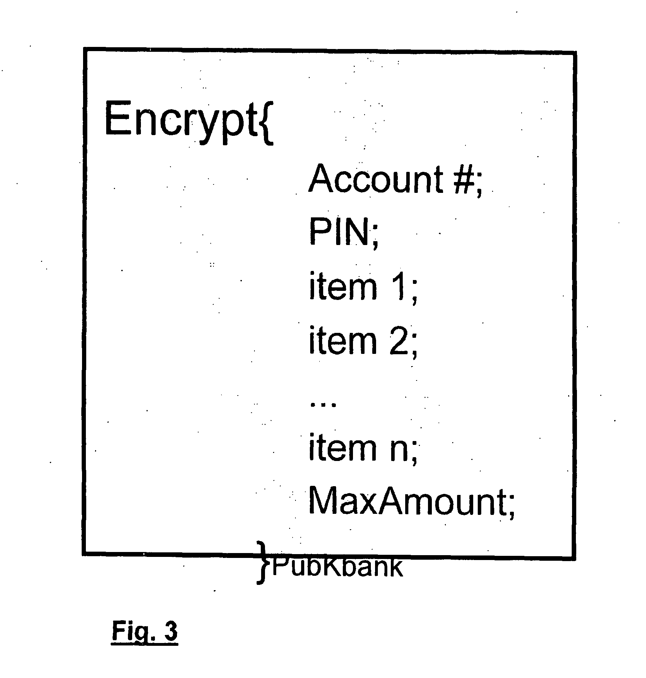

Such a token is schematically illustrated in Fig. 3.

In this manner it can be checked whether the transaction is used to buy the predefined items or anything else.

According to one embodiment the individual items are concatenated to random numbers and then hashed. Such a token may e.g. look as follows:
{... h (itemᵢ, rᵢ)...}BankPubK

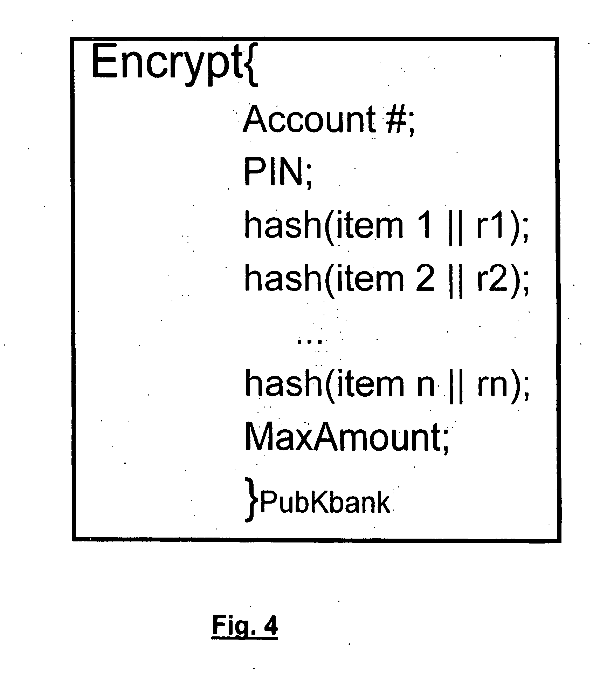

Such a token is schematically illustrated in Fig. 4.

In this manner the items purchased can be kept unknown to the Bank. For that purpose the concierge at first shows the shopping list in clear to the merchant, and for the items which are available at the merchant the concierge transfers the corresponding hashed values h (itemᵢ, rᵢ ) from a "random list" which contains the values h (itemᵢ, rᵢ) for all items itemᵢ of the shopping list. These values are then transferred from the merchant to the bank which cross-checks them against the content of the token.

A further advantage of this embodiment is that the transaction can be split into n sub-transactions

According to a further embodiment there is generated a "random list" corresponding to the shopping list, the random list containing the shopping items itemᵢ and their corresponding random numbers rᵢ. In one embodiment the "shopping list" may just be a part of this "random list" if the item identifiers itemᵢ are identifiable in this list and can be distinguished form the random numbers.

This list is transmitted from the user to the third party (the concierge) and the concierge then for the items to be bought transmits itemᵢ, rᵢ to the merchant. The merchant (or better to say, its computing device) then calculates the hash value h(itemᵢ, rᵢ) for the items to be bought and transmits h(itemᵢ, rᵢ) to the bank. If there are more than one possible hash algorithms used, the list (or a separate message) may contain an identifier to identify the hash algorithm which is to be used.

According to one embodiment the Concierge's ID is included in the token in order to restrict the concierge's role to a specific individual. Such a token may look as follows:
{...ConciergeID...}BankPubK

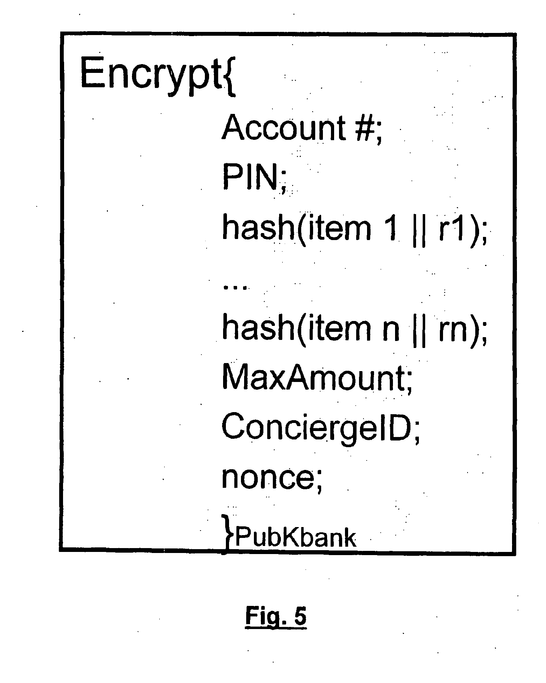

Such a token is schematically illustrated in Fig. 5.

According to one embodiment the token includes a token identifier, e.g. a timestamp or a nonce in order to avoid double spending. Such a token may look as follows:
{... Timestamp...}BankPubK

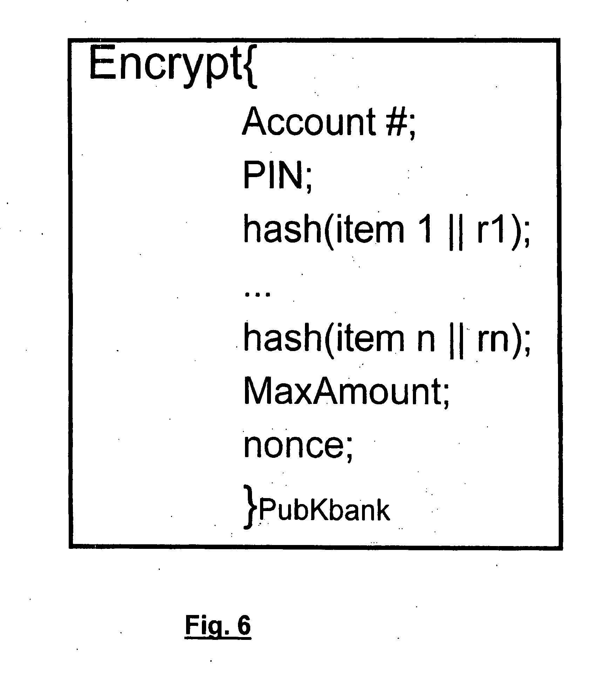

Such a token is schematically illustrated in Fig. 6.

According to one embodiment the token includes open options, e.g. tolerate extra spendings up to a given amount. Such a token may look as follows:
{... options...}BankPubK

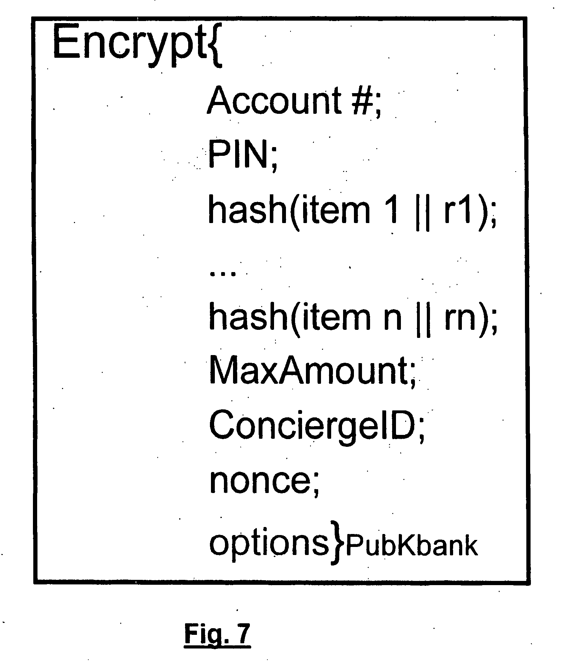

Such a token is schematically illustrated in Fig. 7. The options may specify such further details of a transaction like "exceeding the maximum amount of money by a certain extent is still tolerable" or something alike. Such options may be specified for the individual items. The options may contain any further specifications, limits or alternatives which can be imagined in order to define the transaction in a more precise way. The may include things like "only a single room" and "hotel category not more than 2 stars", or they may include the specification from parents "if the meal includes a salad it may cost more than a certain amount".

The item definitions of the transaction and options can be specified freely, but according to one embodiment they may also make use of a predefined naming convention scheme, especially for items to be bought, like the one of electronic product identifiers or electronic product codes as used in connection with barcodes. The latter unique identifiers make the transaction definition more clear and leave less doubt e.g. on the side of the Concierge and the merchant about what was intended by the issuer, but the mechanism also can operate without such a strict naming convention, and the user may freely include definitions which he considers precise enough for the intended purpose and which enable the Concierge and the merchant then to identify the right goods/services.

According to one embodiment the aforementioned options may be combined such that the resulting token format then looks as follows:
*{Acont#, PIN, h(itemᵢ, rᵢ), MaxAmount,ConciergeID, Timestamp, options}BankPubK*

The token, along with the list of items itemᵢ, rᵢ (in clear text) can be passed from the user to the concierge in several means such as:
- Printed on paper
- Send by Bluetooth/IR
- Display on Mobile
- Send via MMS

At merchant's store, the concierge can give the token and the list of items in several means such as:
- Reader (camera) (e.g. for reading QR codes)
- Typed By Hand (in the ATM example, where the concierge is withdrawing money on behalf of the user)
- Bluetooth/lR
- MMS

The merchant passes the token, with the list of actually purchased items h(itemᵢ, rᵢ) (hashed) to the bank, which approves or rejects the payment, according to the decrypted token or the comparison of data which was received by the bank from the merchant and then encrypted (e.g. hashed) by the bank to compare it with the token.

In the following there will be explained the performance of the proposed embodiments in thwarting different attackers of different capacities.

There will be considered a multi-role adversarial model that takes into consideration what the adversary is assumed to be able to do during an attack against the system.
1. A malicious concierge is able to save and later view transaction tokens and shopping lists. She can attempt to modify and reproduce tokens and lists at a later date, and can attempt to use them with non-colluding merchants.
2. A malicious merchant is able to save and later view transaction tokens, shopping lists, concierge IDs and any other data given to her during previous transactions. She may later attempt to redeem them with a non-colluding bank.
3. A malicious bank is able to save and later view transaction tokens and any data given to it by merchants.
4. A colluding concierge and merchant is the combination of adversaries 1 and 2. The concierge works with the merchant to try and defraud the user or to evade the restraints imposed by the shopping list.
5. A colluding merchant and bank is the combination of adversaries 2 and 3. The merchant and bank work together to try to reveal the identity and full shopping list of the customer.
6. A colluding concierge and bank is the combination of adversaries 1 and 3. The concierge and bank work together to revel the identity and full shopping list of the customer.

### A malicious concierge

This attacker has very few options. Any attempts at modifying, forging or replaying transaction tokens will be detected by the bank and rejected. If the user transmits the transaction tokens electronically to the concierge, he may never learn the identity of the customer. The concierge never learns the customer's account number and PIN, and thus, It Is impossible to later create fraudulent tokens. The anonymity set of the customer increases as the number of customers using a single concierge (or a delivery service) increases. Customers who purchase rather unique items will reveal some information, enabling the linking of multiple transactions even though the customers true identity remains unknown.

### A malicious merchant

This adversarial situation involves both corrupt merchants, and situations involving an insider attack, where an employee of the merchant misuses or steals customer records. The merchant never learns the name or account information of the customer and thus any systems breach or data loss of the merchant's computer systems will not result in the loss of customer's account numbers. The only link to the customer that the merchant has is the concierge, and this can be further weakened if the customer communicates with the concierge electronically.

### A malicious bank

The bank is restricted from knowing the individual items that the customer purchases at each merchant. The bank is only able to learn how many total items were on a shopping list, how many items off the list were purchased at each merchant, and how much the total transactions were for. Customers have their anonymity reduced when large shopping lists are broken up into smaller transactions. An extreme case of this is when a concierge buys a single item from each of several merchants. While the bank does not know which items have been purchased, they do know how much each item costs, due to the fact that each transaction consisted of a single item. Agents of the bank could later visit the merchant's store looking and attempt to find all items sold by a merchant for any particular price. This risk can be reduced by merchants charging variable pricing, or by not splitting up transactions.

### A colluding concierge and merchant

This more advanced adversary is able to neutralize the restriction on shopping lists. The customer can have listed apples on his shopping list, yet the concierge will instead purchase oranges. The colluding merchant will provide the concierge with oranges, but send the bank a confirmation that the apple item from the shopping list was purchased. It is not possible to protect the privacy of the user's shopping list from the bank, without at the same time enabling a colluding merchant and concierge to bypass the shopping list restrictions. The maximum total upper bound on the transaction token will at least protect the user from more egregious abuses.

### A colluding merchant and bank

This advanced adversary is able to neutralize the privacy protection associated with shopping lists. The merchant can reveal the complete shopping list to the bank, and thus permit the bank to create a full record of every item purchased by the user at that merchant. The bank is also able to share the customer's information with the merchant, and thus strip the user of their privacy. In such a situation, the merchant will know who the customer is, and the bank will know every item that the customer purchases from the colluding merchant.

### A colluding concierge and bank

This is a more extreme case of the previous adversary. Whereas a colluding merchant and bank are only able to violate the user's privacy for that specific merchant, a colluding concierge and bank are able to do so for all transactions. Thus, the bank is able to create a complete list of every item purchased through the concierge by the user. If the user has attempted to hide her identity from the concierge by transmitting the transaction tokens electronically, this collusion will strip the user of her privacy. The bank can reveal the user's identity to the concierge, while the concierge can reveal the complete list of purchased items to the bank.

In the following embodiments of the invention will be compared to other alternative approaches.

Thinking of how to implement a delegated transaction, a way which might be considered by a security technology expert could be to use signed documents/shopping lists by using the private key of the user. In the following it will be examined how this approach compares with embodiments of the present invention.
- To keep herself anonymous from the merchant and the concierge, the user should hash her ID or account # to include it in clear text in the shopping list, with a random number to avoid ID matching (h (Account#[[rᵢ), rᵢ). At the bank's side, in order to identify the user before validating the signature, the bank must do a hugely expensive lookup by calculating the hash of every account number.
- The bank must issue a public/private key for every customer.
- Using embodiments of the present invention, it is also possible for the user to create the token using any device, not necessarily his own. According to one embodiment this would involve remembering his PIN. On the other hand, to sign lists using other people's devices, the user would have to remember her complete private key.

There is already a significant amount of research into the field of electronic cash. It should be noted why embodiments of the invention are not an e-cash system, and thus why many of the issues that have plagued e-cash adoption are not relevant to embodiments of the present invention
- This scheme does not involve stored payment tokens. Tokens can be lost or destroyed without any financial lose.
- In case of accidental loss, theft or accident (of either the consumer's phone, the concierge's phone, or a printed out token), there is no risk of fraud.
- This is not an e-wallet.
- Unless the issuing user has specified that the delegated token can be used by anyone else, the tokens are not transferable (if the user ID is included in the token).
- The tokens are not promiser notes. They are not used to pay the concierge, but instead permit the concierge to purchase something on behalf of the consumer. If the consumer has exceeded his bank issued credit limit, the delegated token will be rejected by the bank, even if it is otherwise valid.
- The bank does not need to be involved with the process of issuing tokens. It merely processes the transactions when being given a token by a merchant.
- The scheme is not anonymous. In the case of collusion by the merchant and the bank, or government issued subpoenas, a full paper trail of items and account transactions can be accessed.
- The consumer creating the delegation token, and the concierge who will be purchasing the items do not need to be online. The tokens can be created without access to the bank's systems. The consumer can either create the token and print it out on paper, or send it to the concierge by a Bluetooth or other electronic means.
- The delegated transaction can be split into multiple transactions if needed, e.g. if individual merchants cannot provide all the items required. The consumer creating the token does not need to communicate with the merchants ahead of time, nor even know which merchants the concierge will visit.

The proposed embodiments further preserve privacy with respect to all of the actors involved:

### The Concierge

The third party (e.g. the concierge) purchasing the items for the consumer does not need to learn the consumer's identity. Assuming that the delegation token is transmitted to the concierge electronically, and that the goods can be delivered via a drop box of some kind, the concierge need never physically interact, nor meet the consumer. Furthermore, as the customer's account number is encrypted, the concierge never learns this account number making later identification or reuse of the number impossible.

### The Merchant

The merchant never physically interacts with the consumer. The merchant has no way of learning the consumer's name via the delegation token, and thus if the consumer hides his identity from the concierge, there is no way (unless the merchant colludes with the bank) to learn who the consumer is. The consumer's account number is encrypted within the delegation token, and so any kind of insider theft within the merchant's business will not result in the theft of the consumer's financial details. Furthermore, as more and more consumers use the same concierge, it becomes extremely difficult to link individual transactions to the same unknown customer. Essentially, a customer's anonymity set grows as the number of customers using a single concierge grows.

### The Bank

The merchant passes only a hash of the purchased items to the bank, and thus unless there is collusion between the merchant and bank, it will never have a way of learning which items have been purchased by the customer. The bank only learns which merchants the customer has purchased items from, and how much the transaction was for, and how many items were purchased.

The system requirements to implement the proposed embodiments are relatively low, without the need for considerable changes to existing infrastructures (actually only software rather than hardware changes are needed). This will be explained in somewhat more detail in the following.

### The Customer

To use an embodiment of the invention, the customer needs to have access to either a mobile telephone or a computer. These devices do not necessarily need to be owned by the customer. In many cases, he or she merely needs to have temporary access to them. In the case that the device is owned by the user, he can store his account number into it. If he is borrowing the device from someone else, he will need to find some way to input his account number. This could be done e.g. by hand (entering a 16+ digit number), or e.g. by reading a QR Code printed on the back of the user's card. Depending on the level of personal interaction that the user wishes to have with the concierge, the method of transmission and technical requirements will thus differ. A transaction token can be electronically transmitted using email, instant message, Bluetooth, IR, or MMS. The token can also be printed out onto paper e.g. by representing it as a QR code, and thus either printed out, or faxed to the concierge.

### The Concierge

If the token has been transmitted electronically to the concierge, he will either need to bring it in electronic form (using a mobile phone or any computing device) to the merchant, or print it out onto paper. The technical requirements of his device will depend on the receiving equipment that the merchant has.

### The Merchant

The merchant will need a means of reading in the transaction tokens. E.g. at the most basic and inter-operable level, the merchant will need to have the ability to read QR codes. To accept electronic tokens, the merchant will also need to support either MMS, Bluetooth or IR or any other suitable communication means. All of these tasks can e.g. be accomplished with a basic camera-enabled phone. More complex integration with the merchant's existing billing/receipt system would require additional hardware. The merchant will also need a way to transmit the encrypted transaction tokens and hashes of the purchased items to the bank in order to validate the transaction. However, most merchants already have an electronic transmission system that enables them to process ATM and credit card transactions. The transaction token system in one embodiment could quite easily piggyback on the existing financial transaction transfer system, or any other suitable transmission means could be used.

### The Bank

The bank already communicates with merchants during transactions over the existing financial network, so that credit card numbers can be verified. The scheme according to the presented embodiments additionally requires that the bank decrypts the transaction token (or "re-generates" it by hashing the received data using the predefined hashing scheme to allow verification), verify the contents and then transmit a message back to the merchant. In order to stop double spending and allow transactions to be broken up into multiple sub-transactions serviced by different merchants, the bank should keep track of and remember the contents of a transaction token for a significant time in the future.

In the following there will be presented a few typical applications of the proposed embodiments.

Alice is a busy woman, and thus gets her maid to do the weekly grocery shopping for her. Alice typically provides a list on paper to her maid, and gives the maid enough money to cover the cost of all the items. Alice does not know exactly how much the total will be in advance, thus she must give the maid more than enough money, just in case. The maid's salary is not very high, so Alice cannot expect the maid to be able to pay for the goods herself, and then seek reimbursement after the fact. This scheme is less than ideal for several reasons: Alice must give the maid more money than she needs to, ahead of time, since she does not know the transaction total. The maid may decide to skip town, and take all of Alice's money. The maid may decide to buy lesser quality goods elsewhere, and then keep the money saved without telling Alice.

Alice first creates a shopping list that contains:
ShoppingList = item₁||r₁, item₂||r₂, item₃||r₃, item₄||r₄

Where: rᵢ is a random value that is generated by the user and kept secret from the bank.

Alice then creates the following transaction token:
TransactionToken = {Accnt #, PIN, ts, MaxAmount, ConciergelD, n, h (item₁||r₁) ... h (item4||r₄ )}BankPubK

Where: ts is a timestamp created to prevent double spending. and n is a randomly generated large nonce used to defend against dictionary attacks.

The protocol that follows describes a sample scenario where the maid is given one shopping list, yet is unable to find all of the items at a single shop. Thus, she purchases two items from one merchant, and another item at a second merchant:
- Alice → Maid :
   TransactionToken, ShoppingList
- Maid → Merchant1 :
   TransactionToken, item₁ ||r₁, item₂ ||r₂, ConciergeID,
- Merchant1 → Bank :
   TransactionToken, h(item₁ ||r₁), h(item₂ ||r₂), TotalPrice₁, ConciergeID
- Bank → Merchant1 :
   OkToPurchase : h(item₁ ||r₁),OkToPurchase : h(item₂ ||r₂), OkForPrice : TotalPrice₁
- Maid → Merchant2 :
   TransactionToken, item₃ ||r₃, ConciergeID,
- Merchant2 → Bank :
   h(item₃ ||r₃), TotalPrice₂, TransactionToken, ConciergeID
- bank → Merchant2 :
   OkToPurchase : h(item₃||r₃), OkForPrice : TotalPrice₂

If Alice has underestimated the amount of money that her shopping list will cost, it is necessary that the bank should reject future charges even if the Maid has valid and as yet unpurchased items available on her shopping list
- Maid → Merchant3 :
   TransactionToken, item₄ ||r₄, ConciergeID,
- Merchant3 → Bank :
   h(item₄ ||r₄), TotalPrice₁, TransactionToken, ConciergeID
- Bank → Merchant3 :
   NotOKToPurchase : h(item₄||r₄) : BudgetExceeded

If the Maid tries to create an additional item₅llr₅ that she would like to purchase for herself, the transaction will fail. The bank has a list of the hashes of each permitted item. As the item that the Maid tried to falsify was not included in the encrypted transaction token that Alice contained, the bank will very easily be able to see that the item is not permitted. The following protocol interaction shows that she would be rejected:
- Maid → Merchant4 :
   TransactionToken, item5 ||r5, ConciergelD,
- merchant4 → Bank:
   h(item₅ ||r₅), TotalPrice₃, TransactionToken, ConciergeID
- Bank → Merchant4 :
   NotOKToPurchase : h(item₅ ||r₅) : Badltem

If the maid tries to purchase the same item from two different merchants (i.e. double spending), the transaction will fail. This of course, depends on the bank keeping track of which item hashes have successfully been redeemed in the past. In order to stop simultaneous double spending, the bank may use transaction locking.
- Maid → Merchant5 :
   TransactionToken, item, ||r₁, ConciergeID,
- Merchant5 → Bank:
   h(iterm₁ ||r₁), TotalPrice1, TransactionToken, ConciergeID
- Bank → Merchant5 :
   NotOKToPurchase : h(item₁ ||r₁) : AlreadyPurchasedItem

In cases where the bank suspected that a concierge was attempting fraud, the bank may optionally contact its customer either via SMS message or email to let them know that an suspected attempt at abuse has been detected. This would provide valuable feedback to the customer when they later review their choice of concierge.

**Paying The Maid**: Alice can use the techniques outlined later in connection with the ATM withdrawal delegation to pay the maid for her additional services.

### A Child On Vacation

Charlie is going on vacation for several weeks with his friends. Charlie's mother has offered to help with the cost of the vacation, by paying for the hotel room, and his food costs. Charlie's mother has two choices: She can either give him cash, or give him her credit card, which he can then charge his purchased to. Charlie's mother is concerned that Charlie will opt to sleep in his friend's hotel room and eat cheap food in order to save money. She is worried that Charlie will do this, and then spend all of her money on alcohol. This can be avoided by issuing suitable tokens to Charlie which identify what he is allowed to buy.

### Per Diem, Meal and Expense Vouchers For Companies

Business travelers typically pay for expenses in one of three ways: They pay for the expenses with their own money/credit card, and then later submit receipts; They use a company credit card for all expenses, and then later submit receipts; Or, the company sets a "per diem" price for certain expenses, and the employee is given this money without the need to submit receipts.

The problem with the first method is that employees are then required to loan the company money - as they must pay for the expenses first, and then wait to be reimbursed. For frequent travelers, this can add up to a significant sum of money. The problem with the second method is that the company credit card can be abused by employees, or stolen. Giving an employee a company credit card requires putting a lot of trust in them. The problem with third method, is that employees can spend their allotted per diem however they wish. They may spend it all on alcohol, which many companies would not be happy with. A per diem gives the company no control over how the money is spent, or on what items it is used.

Thus, one similar application of the previously described example would be to use this scheme for business expenses. There are multiple advantages to this. The individual would not have to use his or her own funds to pay for expenses, yet the risk to the business would be significantly lower compared to giving the individual their own credit card. Individual transactions could be limited to specific upper limits, and companies would be able to restrict the purchases to specific types: food, travel, hotel rooms, etc. If the certificates were lost, the company would lose nothing, as the certificates would require a valid ConciergeID to be used. And if a business trip were extended, it would be trivial to issue a number of additional certificates and transmit them by email/fax.

It would also be possible to include specific instructions to the merchant in the certificates, specifying specific goods which may not be purchased. One example of this, could include the blacklisting of alcohol from meals.
One other advantage of this, is that the identity of the employer thus remains a secret. For most companies, this is not an issue. All US government issued credit cards begin with the same first four digits. Thus, anyone working in the hotel with access to the computer system can see which guests are using government issued credit cards. For safety and security reasons, it would be a good idea to keep this kind of information from being available. By using a encrypted payment certificate, the merchant would never learn the identity of the account-owner. They would merely be told if the transaction succeeded or not. People who want to hide their identity from merchants right now must pay with cash. These certificates add one other option, which is far more resistant to theft. Likewise, there is no risk in cases of insider theft. The merchant never learns the credit card number, and thus, there is nothing for a malicious employee to steal.

In the following there will be explained an embodiment of the invention which can be used for delegated ATM withdrawal. This embodiment is not covered by the scope of the claims, it is just explained as an example which may be useful for understanding the invention.

People in remote areas of the world are often very far from the nearest bank, or ATM. Typically, one member of the family, friend, or a village member will go to the main town on a regular basis, and take care of everyone else's business for them. This person will thus carry a large number of ATM cards, each with an accompanying PIN number written down on a piece of paper. This system requires a huge amount of trust, in that the trusted person could choose to draw down everyone else's accounts, and then leave the country. Users are not able to convey their intent ("Please give Tom 40 dollars"), and instead must give complete control over their bank account to that trusted person. While mobile-phone based e-banking would also provide a solution to this problem (in that users could transfer money online to the account of the concierge, who would then withdraw it), this would require that each user have access to an online banking system. The proposed embodiment still works without access to the Internet. Users can be offline when they create transaction tokens. There will be described two solutions to this problem, one that requires access to a printer, or a Bluetooth mobile phone and a Bluetooth compatible ATM machine, and second solution that can be used with a pen and paper. The first embodiment works as follows.

Alice, who is staying at home, has asked her friend Bob to go to the ATM in the nearest large town, which is 8 hours away by bus. Using her mobile phone, Alice thus creates a transaction token:
TransactionToken = {Accnt#, PIN, ts,Amount, ConciergelD, n}BankPubK

Here n is a nonce ( a large random number) which is added to avoid dictionary attacks to get the PIN. An alternative could be to use a large PIN, but it is readily apparent that this has some disadvantages. This token is then either transmitted to Bob's mobile phone via a Bluetooth connection or Alice prints the token in a computer-readable form, such as e.g. using QR codes or barcodes.

The protocol then follows:
- Alice → Bob :
   TransactionToken1
- B Bob → Bank :
   TransactionToken1, ConciergeID,
- Bank → Bob :
   OkForWithdraw : Price

If Bob tries to modify the transaction token in any way, since he will not have Alice's PIN number, he will not be able to create a valid token. The following protocol outlines the failure that would occur with a forged token:
- Alice → Bob :
   TransactionToken2
- Bob → Bank:
   TransactionToken3, ConciergeID
- Bank → Bob:
   NotOkForWithDraw : BadToken

If Bob tries to reuse the same token twice, the bank will reject it. This requires the bank to maintain a list of all redeemed tokens. The following protocol outlines such a failure:
- Alice → Bob:
   TransactionToken4
- Bob → Bank:
   TransactionToken4, ConciergeID
- Bank → Bob:
   OkForWithdraw: Price
- Bob → Bank:
   TransactionToken4, ConciergelD,
- Bank → Bob:
   NotOkForWithdraw: TokenAlreadyUsed

If Bob does not have a mobile phone, or the bank's ATM machine does not support Bluetooth, it is not possible to use the previously described scheme. One must then fall-back to a more limited protocol, which uses the existing infrastructure. This scheme still requires that Alice has a mobile phone or computing device. Alice must, at some previous time, have established a long shared key with the bank. This key must be suitably large, such that it is resistant to a dictionary attack. Using her mobile phone, Alice then creates the transaction token using the pre-established key on which it has pre-agreed with the bank as follows using a hash function:
TransactionToken = h(Accnt#||LongPIN||Timestamp||Amount||ConciergeID)

Alice can then write this hash down on a piece of paper, along with her account number, the timestamp (or any other token identifier), and the amount. A MD5 hash can be written as a 30 alpha/numeric character string. This is short enough that it is reasonable to expect someone to type it into an ATM by hand. The protocol thus follows:
- Alice → Bob :
   TransactionToken1, Accnt#, Timestamp, Amount
- Bob → Bank:
   TransactionToken1, Accnt#, Timestamp, Amount, ConciergeID
- Bank → Bob:
   OkForWithdraw: Amount

According to one embodiment the pre-established key is the same for all users (at least for a certain bank), so that all users using this bank in fact use the same hash algorithm and the bank can relatively easily perform the verification process without the need to distribute and administrate different keys for each user. This embodiment is not covered by the scope of the claims, it is just explained as an example which may be useful for understanding the invention.

If Bob tries to withdraw more money than Alice has authorized, the hash that the bank calculates will not be the same as the one that Alice has given to Bob. Thus, the transaction will fail. This protocol outlines such an attempt:
- Alice → Bob :
   TransactionToken2, Accnt#, Timestamp, Amount2
- Bob → Bank :
   TransactionToken2, Accnt#, Timestamp, Amount3, ConciergeID
- Bank → Bob :
   NotOkForWithdraw: BadAmount

If Bob tries to use the same token multiple times, the repeat transactions will fail. This depends on the bank keeping track of redeemed transaction tokens. In this case there should be ensured by a suitable mechanism that there is only one token (for the same withdraw amount) per unique timestamp:
- Alice → Bob:
   TransactionToken3, Accnt#, Timestamp, Amount
- Bob → Bank:
   TransactionToken3, Accnt#, Timestamp, Amount, ConciergeID,
- Bank → Bob :
   OkForWithdraw: Amount
- Bob → Bank :
   TransactionToken3, Accnt#, Timestamp, Amount, ConciergeID,
- Bank → Bob:
   NotOkForWithdraw: TokenAlreadyUsed

The previously described delegated concierge scheme according to one embodiment can be modified slightly to provide traveler cheque like functionality. This embodiment is not covered by the scope of the claims, it is just explained as an example which may be useful for understanding the invention. A user can either assign the ConciergeID to be their own ID, or to protect against cases where they lose their wallet and all forms of identification, a password or one time PIN number could be substituted for the ConciergelD field. Examples of this can include a travelers cheque limited to one train ticket costing less than 100 dollars, a night in a hotel, or a meal in a restaurant that costs less than 30 dollars.

Such travelers cheques could be photocopied, allowing an individual to keep multiple copies on his or her person, should they be robbed, or lose their wallet. A copy could e.g. be kept online (by emailing it to themselves), and likewise, business travelers could leave a copy with their secretary back at the office, who could then fax them the printed out transaction token upon demand.

Such a scheme has several advantages over existing travelers cheques.

E.g. individuals who lose their travelers cheque when on vacation or a business trip must contact American Express (or another issuer), who will then cancel the existing cheques, issue new ones, and rush ship them to the waiting customer. If the individual is in a big city, he may be able to go to a nearby American Express office, but otherwise, he will have to wait for them to arrive by FedEx. Travelers cheques cannot be photocopied, as merchants have been told to only accept the authentic article. Travelers cheques cannot be transmitted by fax, email, or any electronic medium. Another key problem with the travelers cheque, from the perspective of the customer, is that they must pay for them up-front. A travelers cheque, intended to be used in case of an emergency, which will sit in a customer's wallet for 6 months, will be 6 months of interest on that money that the customer does not earn.

Due to the requirement that the customer purchase travelers cheques before they are used, it also makes it infeasible for someone to go into debt to buy them. Travelers cheques are often used by customers in emergencies. At such moments, it may be reasonable for someone to go into unforeseen debt, due to the circumstances of the situation. Travelers cheques do not allow for this. One can spend only the cheques that one has previously purchased. Thus, these really are a stored payment medium, and not in any way a form of credit.

Such a scheme also has several advantages over wiring money in an emergency.

Money can be lost. It can be stolen. As unfortunate as it is, lightning can strike the same place twice. An individual, who for whatever reason, has lost their wallet when traveling, would be unwise to seek an emergency wire of funds - via a bank, or a service such as western union. If misfortune visits them again, they will again be out of luck. Furthermore, wire services typically have fairly significant commissions. This, of course, depends on the bank being open. In many places in the world, the wiring of money is only available during business hours. Wiring money also requires the co-operation of someone on the other end of the transaction: a friend, colleague, loved one. This requires of course, that the individual have a way to reach these friends. Collect, or reverse charge calling, is not available in all parts of the world. In many parts of Asia and the middle east, it simply does not exist. Thus, before someone can request a wire, they must find a way to pay for an international phone call.

For online shopping, without any concierge involved, the customer can use the proposed mechanism in the same way as "randomized credit cards" where the goal Is to avoid a malicious merchant from re-using the credit card data.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise computing device or a mobile phone or any mobile device which is suitably programmed such that it is able to carry out a delegated transaction as described in the embodiments of the invention.

According to an embodiment of the invention there is provided a computer program, either stored in a data carrier or in some other way embodied by some physical means such as a recording medium or a transmission link which when being executed an a computer enables the computer to operate in accordance with the embodiments of the invention described hereinbefore.

## Claims

1. A computer implemented method for enabling a third party by a user to execute a transaction on behalf of the user, said method comprising:
generating a token based on at least an account identifier identifying an account of said user, a secret authorization identifier known only by the user and a bank and corresponding to said account of said user, and a transaction definition defining the type of transaction to be performed:
encrypting said token by an encryption method to generate an encrypted token, said encryption method being predefined such that it is known by said bank and can be performed inversely by said bank;
transferring said encrypted token from said user to said third party to thereby authorize said third party to execute the transaction as defined in said transaction definition on behalf of the account of said user specified in said token,; wherein
for executing said transaction said encrypted token is transferred to the bank to which the account specified in said token belongs, said bank verifying the authenticity of said encrypted token by performing an inverse encryption of said encrypted token in order to either allow or refuse said transaction on behalf of the account of said user depending on whether the correctness of said secret authorization identifier corresponding to said account could be verified or not, said method further being **characterized by** comprising:
including in said token a list of identifiers identifying the items which should be bought by the third party on behalf of the user, said identifiers being respectively concatenated to random numbers and hashed;
transmitting the identifiers of the one or more items to be bought concatenated with their corresponding random numbers from the third party to the merchant,
transferring said encrypted token from said third party to the merchant;
for each of the identifiers concatenated with a random number which was transmitted to said merchant, calculating by said merchant a hash value based on the identifier and the corresponding random number;
transmitting the encrypted token and the calculated hash values from the merchant to the bank;
inversely performing by said bank said encryption of said token; and
allowing the transaction by said bank only it the one or more hash values sent by the merchant are included in said decrypted token,

2. The method of claim 1. wherein said encryption of said token comprises the following:
encrypting said token with the public key of the bank to which the account specified in said token belongs

3. The method of one of the preceding claims, wherein said token further includes one or more of the following :
an identifier of the third party;
an identifier of the token;
a timestamp;
one or more transaction options;
a maximum amount of money to be spent using the token;
the respective maximum prices for the individual items on the shopping list.

4. The method of one of the preceding claims, further comprising:
keeping track of the transactions which have been performed by using a certain token by the bank;
deducting the used amount from the token to obtain the remaining credit for the token; and
for each new transaction to be performed, checking whether the token still has sufficient credit to execute this transaction.

5. The method of one of the preceding claims, wherein
instead of the identifier of the third party there is included in said token the identifier of the user or a unique code or password only known to the user to thereby generate a self-issued traveler cheque to the user by himself.

6. An apparatus for enabling a third party by a user to execute a transaction on behalf of the user, said apparatus comprising;
a module for generating a token based on at least an account identifier identifying an account of said user, a secret authorization identifier known only by the user and a bank and corresponding to said account of said user, and a transaction definition
defining the type of transaction to be performed;
a module for encrypting said token by an encryption method to generate an encrypted token, said encryption methods being predefined such that it can be performed inversely by said bank;
a module for transferring said encrypted token from said user to said third party to thereby authorize said third party to execute the transaction as defined in said transaction definition on behalf of the account of said user specified in said token;
a module for transferring said encrypted token to the bank to which the account specified in said encrypted token belongs for execution, said bank verifying the authenticity of said encrypted token by performing an inverse encryption of said encrypted token in order to either allow or refuse said transaction on behalf of the account of said user depending on whether the correctness of said secret authorization identifier corresponding to said account could be verified or not, said apparatus further being **characterized by** comprising:
means for including in said token a list of identifiers identifying the items which should be bought by the third party on behalf of the user, said identifiers being respectively concatenated to random numbers and hashed;
means for transmitting the identifiers of the one or more items to be bought concatenated with their corresponding random numbers from the third party to the merchant,
means for transferring said encrypted token from said third party to the merchant; means for, for each of the identifers concatenated with a random number which was transmitted to said merchant, calculating by said merchant a hash value based on the identifier and the corresponding random number,
means for transmitting the encrypted token and the calculated hash values from the merchant to the bank:
means for inversely performing by said bank said encryption of said token; and allowing the transaction by said bank only if the one or more hash values sent by the merchant are included in said decrypted token.

7. The apparatus of claim 6, further comprising:
a module for performing a method according to one of claims 2 to 5.

8. A computer program comprising computer program code which when being executed on a computer enables said computer to carry out a method according to one of claims 1 to 5.

## Patentansprüche

1. Computerimplementiertes Verfahren, um eine dritte Partei durch einen Benutzer in die Lage zu versetzen, eine Transaktion auf Rechnung des Benutzers auszuführen, wobei das Verfahren aufweist:
Erzeugen eines Tokens basierend auf zumindest einem Kontenidentifizierer, der ein Konto des Benutzers identifiziert, eines geheimen Autorisierungsidentifizierers, der nur den Benutzer und einer Bank bekannt ist und dem Konto des Benutzers entspricht sowie einer Transaktionsdefinition, die dem Typ der auszuführenden Transaktion definiert;
Verschlüsseln des Tokens mittels eines Verschlüsselungsverfahrens, um ein verschlüsseltes Token zu erzeugen, wobei das Verschlüssungsverfahren derart vordefiniert ist, dass es der Bank bekannt ist und invers durch die Bank ausgeführt werden kann;
Übertragen des verschlüsselten Tokens von dem Benutzer an die dritte Partei, um **dadurch** die dritte Partei zu authorisieren, die in der Transaktionsdefinition für Rechnung des Kontos des in dem Token spezifizierten Benutzers auszuführen, wobei
zum Ausführen der Transaktion das verschlüsselte Token zu der Bank, zu der das in dem Token spezifierte Konto gehört, übertragen wird, die Bank die Authentizität des verschlüsselten Tokens durch Ausführen einer inversen Verschlüsselung des verschlüsselten Tokens verifiziert, um entweder die Transaktion auf Rechnung des Kontos des Benutzers zu erlauben oder zu verweigern, abhängig davon, ob die Korrektheit des geheimen Autorisationsindentifizierers, der dem Konto entspricht, verifiziert werden konnte oder nicht, wobei das Verfahren ferner **gekennzeichnet ist dadurch**, dass es aufweist:
Einschießen einer Liste von Indentifizierern in dem Token, welche diejenigen Dinge indentifizieren, die **durch** die dritte Partei auf Rechnung des Benutzers gekauft werden sollen, wobei die Indentifizierer jeweils mit Zufallszahlen verkettet werden und gehasht werden;
Übertragen der Identifizierer der einen oder mehreren Dinge, die gekauft werden sollen und die mit ihren jeweiligen Zufallszahlen verkettet wurden von der dritten Partei zu dem Händler,
Übertragen des verschlüsselten Tokens von der dritten Partei zu dem Händler;
für jeden der mit einer Zufallszahl verketteten Identifizierer, der zu dem Händler übertragen wurde, berechnen eines Hashwertes **durch** den Händler basierend auf dem Identifizierer und der entsprechenden Zufallszahl;
Übertragen des verschlüsselten Tokens und des berechneten Hashwertes von dem Händler zu der Bank;
Durchführen einer inversen Verschlüsselung des Tokens **durch** die Bank; und
Erlauben der Transaktion **durch** die Bank nur dann, wenn die ein oder mehreren Hashwerte, die **durch** den Händler gesandt wurden, in dem entschlüsselten Token enthalten sind.

2. Verfahren nach Anspruch 1, wobei die Verschlüsselung des Tokens folgendes aufweist:
Verschlüsseln des Tokens mit dem öffentlichen Schlüssel der Bank zu dem das Konto, das in dem Token spezifiziert wird, gehört.

3. Verfahren nach einem der vorhergehenden Ansprüche, wobei das Token ferner eines oder mehrer der Folgenden einschließt:
einen Identifizierer der dritten Partei;
einen Identifizierer des Tokens;
einen Zeitstempel;
eine oder mehrere Transaktionsoptionen;
einen Maximalbetrag an Geld, der durch das Token ausgegeben werden kann,
die jeweiligen Maximalpreise für die individuellen Dinge der Einkaufsliste.

4. Verfahren nach einem der vorher gehenden Ansprüche, ferner aufweisend:
Buchführen über die Transaktionen, die unter Verwendung eines bestimmten Tokens ausgeführt wurden, durch die Bank;
Abziehen des verwendeten Betrags von dem Token, um den verbleibenden Kredit für das Token zu erhalten;
und Überprüfen für jede neue auszuführende Transaktion, ob das Token noch über ausreichenden Kredit verfügt, um diese Transaktion auszuführen.

5. Verfahren nach einem der vorhergehenden Ansprüche, wobei
anstelle des Identifizieres der dritten Partei in dem Token der Identifizierer des Benutzers oder ein eindeutiger Code oder ein eindeutiges Passwort eingeschlossen wird, das nur für den Benutzer bekannt ist, um **dadurch** durch den Benutzer einen selbst ausgestellten Reisescheck für den Benutzer zu erstellen.

6. Vorrichtung, um eine dritte Partei durch einen Benutzer in die Lage zu versetzen, auf Rechnung des Benutzers eine Transaktion auszuführen, wobei die Vorrichtung aufweist:
Ein Modul zum Erzeugen eines Tokens basierend auf zumindest einem Kontenidentifizierer, der ein Konto des Benutzers identifiziert, eines geheimen Autorisierungsidentifizierers, der nur den Benutzer und einer Bank bekannt ist und dem Konto des Benutzers entspricht sowie einer Transaktionsdefinition, die dem Typ der auszuführenden Transaktion definiert;
ein Modul zum Verschlüsseln des Tokens mittels eines Verschlüsselungsverfahrens, um ein verschlüsseltes Token zu erzeugen, wobei das Verschlüssungsverfahren derart vordefiniert ist, dass es der Bank bekannt ist und invers durch die Bank ausgeführt werden kann;
ein Modul zum Übertragen des verschlüsselten Tokens von dem Benutzer an die dritte Partei, um **dadurch** die dritte Partei zu authorisieren, die in der Transaktionsdefinition für Rechnung des Kontos des in dem Token spezifizierten Benutzers auszuführen,
ein Modul um zum Ausführen der Transaktion das verschlüsselte Token zu der Bank, zu der das in dem Token spezifierte Konto gehört, zu übertragen wird, wobei ie Bank die Authentizität des verschlüsselten Tokens durch Ausführen einer inversen Verschlüsselung des verschlüsselten Tokens verifiziert, um entweder die Transaktion auf Rechnung des Kontos des Benutzers zu erlauben oder zu verweigern, abhängig davon, ob die Korrektheit des geheimen Autorisationsindentifizierers, der dem Konto entspricht, verifiziert werden konnte oder nicht, wobei die Vorrichtung ferner **gekennzeichnet ist dadurch**, dass Sie aufweist:
eine Einrichtung zum Einschießen einer Liste von Indentifizierern in dem Token, welche diejenigen Dinge indentifizieren, die **durch** die dritte Partei auf Rechnung des Benutzers gekauft werden sollen, wobei die Indentifizierer jeweils mit Zufallszahlen verkettet werden und gehasht werden;
eine Einrichtung zum Übertragen der Identifizierer der einen oder mehreren Dinge, die gekauft werden sollen und die mit ihren jeweiligen Zufallszahlen verkettet wurden von der dritten Partei zu dem Händler,
eine Einrichtung zum Übertragen des verschlüsselten Tokens von der dritten Partei zu dem Händler;
eine Einrichtung um für jeden der mit einer Zufallszahl verketteten Identifizierer, der zu dem Händler übertragen wurde, einen Hashwertes **durch** den Händler basierend auf dem Identifizierer und der entsprechenden Zufallszahl zu berechnen;
eine Einrichtung zum Übertragen des verschlüsselten Tokens und des berechneten Hashwertes von dem Händler zu der Bank;
eine Einrichtung zum Durchführen einer inversen Verschlüsselung des Tokens durch die Bank; und
eine Einrichtung zum Erlauben der Transaktion **durch** die Bank nur dann, wenn die ein oder mehreren Hashwerte, die **durch** den Händler gesandt wurden, in dem entschlüsselten Token enthalten sind.

7. Vorrichtung nach Anspruch 6, ferner aufweisend:
ein Modul zum Durchführen eines Verfahrens gemäß einem der Ansprüche 2 bis 5.

8. Computerprogramm aufweisend, Computerprogrammcode der, wenn er auf einem Computer ausgeführt wird, den Computer in die Lage versetzt, ein Verfahren gemäß einem der Ansprüche 1 bis 5 auszuführen.

## Revendications

1. Procédé mis en oeuvre par ordinateur pour permettre à un tiers par un utilisateur d'exécuter une transaction pour le compte de l'utilisateur, ledit procédé comprenant :
générer un jeton sur la base d'au moins un identifiant de compte identifiant un compte dudit utilisateur, un identifiant d'autorisation secret connu uniquement de l'utilisateur et d'une banque et correspondant au dit compte dudit utilisateur, et une définition de transaction définissant le type de transaction à effectuer ;
crypter ledit jeton par un procédé de cryptage pour générer un jeton crypté, ledit procédé de cryptage étant prédéfini de manière à être connu par ladite banque et de manière à pouvoir être effectué inversement par ladite banque ;
transférer ledit jeton crypté dudit utilisateur au dit tiers pour autoriser de ce fait ledit tiers à exécuter la transaction telle qu'elle est définie dans ladite définition de transaction pour le compte du compte dudit utilisateur spécifié dans le jeton ; dans lequel
pour exécuter ladite transaction, ledit jeton crypté est transféré à la banque à laquelle appartient le compte spécifié dans ledit jeton, ladite banque vérifiant l'authenticité dudit jeton crypté en effectuant un cryptage inverse dudit jeton crypté pour autoriser ou refuser ladite transaction pour le compte du compte dudit utilisateur selon que l'exactitude dudit identifiant d'autorisation secret correspondant au dit compte peut être vérifiée ou pas, ledit procédé étant en outre **caractérisé en ce qu'**il comprend :
inclure dans ledit jeton une liste d'identifiants identifiant les articles à acheter par le tiers pour le compte de l'utilisateur, lesdits identifiant étant respectivement concaténés en nombres aléatoires et hachés ;
transmettre des identifiant du ou des articles à acheter concaténés avec leurs nombres aléatoires correspondants du tiers au marchand,
le transfert dudit jeton crypté dudit tiers au marchand ;
pour chacun des identifiants concaténés avec un nombre aléatoire qui a été transmis au dit marchand, le calcul par ledit marchand de la valeur de hachage sur la base de l'identifiant et du nombre aléatoire correspondant ;
la transmission du jeton crypté et des valeurs de hachage calculées du marchand à la banque;
exécuter de façon inversée par ladite banque ledit cryptage dudit jeton ; et
autoriser la transaction par ladite banque uniquement si la ou les valeurs de hachage envoyées par le marchand sont incluses dans ledit jeton décrypté.

2. Procédé selon la revendication 1, dans lequel ledit cryptage dudit jeton comprend ce qui suit :
crypter ledit jeton avec la clé publique de la banque à laquelle appartient le compte spécifié dans ledit jeton.

3. Procédé selon l'une quelconque des revendications précédentes, dans lequel ledit jeton comprend en outre un ou plusieurs de ce qui suit :
un identifiant du tiers ;
un identifiant du jeton ;
un horodatage ;
une ou plusieurs options de transaction ;
un montant maximum d'argent à dépenser en utilisant le jeton ;
les prix maximaux respectifs pour les articles individuels sur la liste d'achat.

4. Procédé selon l'une quelconque des revendications précédentes, comprenant en outre :
suivre les transactions qui ont été effectuées en utilisant un certain jeton par la banque ;
déduire le montant utilisé du jeton pour obtenir le crédit restant pour le jeton ; et
pour chaque nouvelle transaction à effectuer, vérifier que le jeton dispose toujours du crédit suffisant pour exécuter cette transaction.

5. Procédé selon l'une quelconque des revendications précédentes, dans lequel
au lieu de l'identifiant du tiers, il est inclus dans ledit jeton l'identifiant de l'utilisateur ou un code ou mot de passe unique connu seulement de l'utilisateur pour générer de ce fait un chèque de voyage émis à l'utilisateur par lui-même.

6. Appareil pour permettre à un tiers par un utilisateur d'exécuter une transaction pour le compte de l'utilisateur, ledit appareil comprenant :
un module pour générer un jeton sur la base d'au moins un identifiant de compte identifiant un compte dudit utilisateur, un identifiant d'autorisation secret connu uniquement de l'utilisateur et d'une banque et correspondant au dit compte dudit utilisateur, et une définition de transaction définissant le type de transaction à effectuer ;
un module pour crypter ledit jeton par un procédé de cryptage pour générer un jeton crypté, ledit procédé de cryptage étant prédéfini de manière à pouvoir être effectué inversement par ladite banque ;
un module pour transférer ledit jeton crypté dudit utilisateur au dit tiers pour autoriser de ce fait ledit tiers à exécuter la transaction telle qu'elle est définie dans ladite définition de transaction pour le compte du compte dudit utilisateur spécifié dans le jeton ;
un module pour transférer ledit jeton crypté à la banque à laquelle appartient le compte spécifié dans ledit jeton crypté pour exécution, ladite banque vérifiant l'authenticité dudit jeton crypté en effectuant un cryptage inverse dudit jeton crypté pour autoriser ou refuser ladite transaction pour le compte du compte dudit utilisateur selon que l'exactitude dudit identifiant d'autorisation secret correspondant au dit compte peut être vérifiée ou pas, ledit appareil étant en outre **caractérisé en ce qu'**il comprend :
un moyen pour inclure dans ledit jeton une liste d'identifiants identifiant les articles à acheter par le tiers pour le compte de l'utilisateur, lesdits identifiants étant respectivement concaténés en nombres aléatoires et hachés ;
un moyen pour transmettre les identifiants du ou des articles à acheter concaténés avec leurs nombres aléatoires correspondants du tiers au marchand,
un moyen pour transférer ledit jeton crypté dudit tiers au marchand ;
un moyen, pour chacun des identifiants concaténés avec un nombre aléatoire qui a été transmis au dit marchand, pour calculer par ledit marchand une valeur de hachage sur la base de l'identifiant et le nombre aléatoire correspondant ;
un moyen pour transmettre le jeton crypté et les valeurs de hachage calculées du marchand à la banque ;
un moyen pour exécuter de façon inversée par ladite banque ledit cryptage dudit jeton ; et
un moyen pour autoriser la transaction par ladite banque uniquement si la ou les valeurs de hachage envoyées par le marchand sont incluses dans ledit jeton décrypté.

7. Appareil selon la revendication 6, comprenant en outre :
un module pour effectuer un procédé selon l'une quelconque des revendications 2 à 5.

8. Programme informatique comprenant un code de programme informatique qui, lorsqu'il est exécuté sur un ordinateur, permet au dit ordinateur d'effectuer un procédé selon l'une quelconque des revendications 1 à 5.
